(19) Europäisches Patentamt
European Patent Office
Office européen des brevets

(11) **EP 0 817 564 B1**

(12) **EUROPEAN PATENT SPECIFICATION**

(45) Date of publication and mention
of the grant of the patent:
**11.10.2000 Bulletin 2000/41**

(51) Int Cl.⁷: **A01G 31/00**, B65D 85/52

(86) International application number:
**PCT/US96/03384**

(21) Application number: **96910434.8**

(22) Date of filing: **12.03.1996**

(87) International publication number:
**WO 96/28013 (19.09.1996 Gazette 1996/42)**

(54) **MEDIUM FOR STORING, TRANSPORTING AND/OR GROWING A PLANT**

**MEDIUM ZUM LAGERN, TRANSPORTIEREN UND/ODER ZÜCHTEN VON PFLANZEN**

**MILIEU DE STOCKAGE, DE TRANSPORT ET/OU DE CULTURE D'UN VEGETAL**

(84) Designated Contracting States:
**DE FR GB NL**

(30) Priority: **13.03.1995 US 404814**

(43) Date of publication of application:
**14.01.1998 Bulletin 1998/03**

(73) Proprietor: **RANPAK CORPORATION**
**Concord Township, OH 44077-9702 (US)**

(72) Inventor: **SANTOIEMMO, Carl, V.**
**Willoughby Hills, OH 44092 (US)**

(74) Representative: **Powell, Timothy John et al**
**Eric Potter Clarkson,**
**Park View House,**
**58 The Ropewalk**
**Nottingham NG1 5DD (GB)**

(56) References cited:
**EP-A- 0 039 747**      **EP-A- 0 504 644**
**WO-A-95/12535**      **NL-A- 7 809 211**
**US-A- 5 173 352**

**Description**

This invention relates to a medium for storing, transporting and/or growing an unsoiled plant and, more particularly, to a mass of intermixed crimped cellulose paper strips that is treated with a plant growth-enhancing material and is useful for storing, transporting and/or growing such plant.

In the nursery industry, one major category of vegetation includes woody ornamental plants, such as fruit trees, dogwood trees, willow trees, etc. In a typical nursery distribution chain for woody ornamental plants, the initial link is a "propagator" or "grower of seeds." The propagator will plant the seeds in soil trays and cultivate the seedlings growing there from until they reach a sufficient maturity for storage/shipping.

Once the seedlings reach a sufficient maturity, they are removed from the trays. Sometimes, the soil which clings to the roots of the seedlings is left thereon during shipping/storage. Often, however, the soil is completely removed from the roots so that the propagator can conserve soil for future plantings. Thus, the seedlings unsoiled roots are "bare" or "exposed" and, prior to shipment/storage, they must be wrapped, or packed, with a suitable packing product.

Once the exposed roots of the plants are packed, they may be immediately shipped to another location (i.e., a wholesale grower, a plant retailer, or a mail order consumer). This shipment usually entails compiling a plurality of the root-packed plants in a box, and then shipping the box to the desired location. At the desired location, the seedlings will be replanted, either by being inserted directly in the ground or by being potted, depending on the circumstances. With particular reference to plant retailers, they may place the packed unsoiled roots of a seedling in a bag for short term consumer transporting purposes.

Alternatively, the root-packed plants may be temporarily stored (two to four months) in a dormant environment in preparation for the next suitable planting season. During this temporary storage (sometimes called "cold storage") the root-packed plants are stacked on pallets and maintained at approximately 40°F (4.4°C). Also, some sort of sprinkling system will usually be provided to periodically "re-wet" the root-packed plants. At the termination of the storage period, the root-packed plants are shipped to another location in substantially the same manner as discussed in the preceding paragraph.

In the past, "Sphagnum Moss" and "Shingletow" have been the primary packing products used by propagators to ship/store plants with exposed roots. These products seem to have acceptable moisture capacities for plant-dormancy purposes. (Specifically, as explained in more detail below, Sphagnum Moss has a 533% moisture capacity and Shingletow has a 419% moisture capacity.) Additionally, these prior art packing products appear to have satisfactory re-wetting intervals (Sphagnum Moss has a three to four day re-wetting interval and Shingletow has a two to three day re-wetting interval). A further advantage of the Sphagnum Moss and Shingletow packing products is that they do not exhibit any mold-induced or other breakdowns under cold storage conditions.

Nevertheless, the use of Sphagnum Moss and/or Shingletow for root-packing purposes is not without drawbacks. For example, Sphagnum Moss is a harvested plant and thus its price/availability is subject to seasonal climate fluctuations. Additionally, as with any harvested commodity (and also because of the wide range of Sphagnum Moss species in existence) this product's quality tends to vary widely and consistency is difficult to obtain. Regarding Shingletow, it is a byproduct of a shingle manufacturing process whereby its cost, accessibility, and/or quality is at the mercy of the completely unrelated roofing industry.

Moreover, the moisture capacities of Sphagnum Moss and Shingletow, while suitable for plant dormancy purposes, are believed to be excessive for shipping and storage situations. As was indicated above, Sphagnum Moss has a 533% moisture capacity and Shingletow has a 419% moisture capacity. (In the context of the present application, the "moisture capacity" of a particular product corresponds to the percentage increase in the weight of the wetted product as compared to the weight of the dry product.) Thus, "wetted" Sphagnum Moss holds 5.33 times its dry weight and "wetted" Shingletow holds 4.19 times its dry weight. These excessive moisture capacities result in a substantial amount of unnecessary "water weight" in the wetted packing product which translates into increased shipping costs when the root-packed plants are transported and/or which translates into elevated water/labor bills when the root-packed plants are placed in cold storage.

It is common in various growing environments to use a growth bed other than dirt and soil. For example, it is recognized that acid or desert soils usually cannot sustain any appreciable growth. Also, many soils may adversely affect plant growth owing to such factors as nutrient depletion, chemical poisoning, improper pH adjustment, or even poor soil consistency. As a result, many green houses use a non-soil growth bed to obtain better pH control of growing conditions, ease handling of the growth bed since heavy soil is not used, provide an enhanced air and liquid permeability, and minimize harmful bacterial growth.

Many different varieties of growth beds have been produced and commercialized. For example, U.S. Patents 4,292,760 and 4,292,761 to Krave disclose a porous, urethane substrate used as a bed for sprouting seeds. U.S. Patent 4,424,645 to Rannali discloses the use of compressed peat pellets packaged in a flexible, rollable container to facilitate handling thereof as well as mineral wool fibers. In addition, mixtures of mineral wool fibers with peat, and even dried peat and Styrofoam beads have been used as a growth bed.

Inherent limitations of these growth beds have restricted their application. For example, a combination of peat and other products may provide a growth bed having sufficient nutrients and air-liquid permeability. Nevertheless, peat is nonhomogeneous, prone to harmful bacterial growth, and difficult to stabilize for pH adjustment. In addition, peat is cumbersome to transport even when dried and compressed within a container or grow receptacle of some type since the amount which the peat can be compressed is limited.

Mineral wool fibers, on the other hand, provide a growth bed which possesses acceptable air and fluid permeability which makes it practical for insertion into a plastic bag, which commonly is referred to in the trade as a "grow bag." Holes can be punched in the bag and the roots of a plant or a plant positioned in a block of urethane or soil inserted therein. To sustain growth, nutrient laden water and sometimes bacterial growth inhibitors or other plant growth stimulators are added.

As compared to growth beds of peat or combinations of peat, soil, urethane or other growth bed materials, mineral wool fibers are homogenous and can be added to a "grow bag" in measured amounts for providing an established density and volume which aids in maintaining a constant air and fluid permeability. However, even with these benefits, the use of mineral wool fibers as a growth bed are limited. Mineral wool fibers do not "wick" water adequately and currently the use of such fibers has become the subject of health concerns. Also, these fibers are heavy and cannot be compressed to facilitate shipping and handling. This makes transport particularly to those overseas countries which have a need for alternative growth beds costly, burdensome and impractical.

Shredded paper usually lays flat within the container and a very large amount of paper is required to provide the bulk needed to fill the voids and to protect the contained object. To provide such a large amount of shredded paper is often cost prohibitive and, following its use, such voluminous amounts of paper must be disposed. In addition, the shock absorbency of flat shredded paper is minimal.

U.S. Patent 4,918,861 discloses a plant growth bed for growing plants which includes a bag formed of a relatively thin plastic sheet material impervious to passage of liquids and air therethrough with a relatively high loft bedding of crimped textile fibers substantially filling the bag. The major portion of the crimped textile fibers are hydrophobic staple fibers and the remaining minor portion of the crimped textile fibers are hydrophilic fibers intermixed or blended together. The high loft of the textile fibers provides open spaces around the fibers to allow for optimum air for proper root development and plant growth. The bedding is readily compressible as for compact shipment to about 1/5 the thickness of the uncompressed high loft bedding. In an uncompressed condition the bedding has an overall thickness of at least about $7.62 \times 10^{-2}$ m (3 inches) and a density of 0.295 to 1.18 Kg m$^{-3}$ (0.5 to 2 pounds per cubic foot). The bedding of fibers has the ability to retain amongst the fibers forming the bedding at least about four times its weight of a liquid.

Dutch Patent Publication NL 7809211 discloses a growth medium which comprise randomly oriented strips of water-absorbent shredded paper impregnated with plant nutrients. The reference indicates that the paper can be impregnated with N, P and/or K fertilizers; trace elements, especially, Fe, Mn, B, Cu, Zn, Mo and/or Co; and a fungicide to inhibit mould growth.

U.S. Patents 5,088,972; 5,134,013; and 5,173,352 disclose techniques for making packing products comprised of crimped paper strips.

The present invention provides a medium as defined in Claim 1 hereinafter.

The medium may include the features as defined in any one or more of dependent Claims 2 to 18.

The present invention also provides a plant as defined in Claim 19 hereinafter.

The present invention also provides a method as defined in Claim 20 hereinafter.

This invention relates to a medium that is suitable for storing, transporting and/or growing a plant, comprising: a mass of crimped intermixed cellulose paper strips, each of said strips having a narrow width, elongated longitudinally compressed length, and a plurality of transverse folds over the length thereof to provide said strips with a longitudinally compressed construction; said paper strips having a plant growth-enhancing material adhered to their surface. In one embodiment, the inventive medium is made by a process comprising: treating a sheet of paper with a plant growth-enhancing material; cutting the sheet of paper into a plurality of paper strips having narrow widths and elongated lengths; crimping the paper strips to form a plurality of transverse folds over the length of said strips and provide said strips with a longitudinally compressed construction; and intermixing said strips to form a mass of crimped intermixed cellulose paper strips treated with a plant growth-enhancing material.

In the annexed drawings, like parts and features have like designations.

Fig. 1 is a schematic illustration of a mass of crimped intermixed cellulose paper strips which has been treated with a plant growth-enhancing material within the scope of the invention.

Fig. 2 is a schematic illustration of a plant with unsoiled roots which can be stored, transported and/or grown using the mass of intermixed crimped paper strips illustrated in Fig. 2.

Fig. 3 is a schematic illustration of the plant of Fig. 2 with the mass of intermixed crimped paper strips of Fig. 1 surrounding the unsoiled roots of said plant.

Fig. 4 is a schematic illustration of a plurality of unrooted plants placed in a box and the mass of intermixed crimped paper strips of Fig. 1 partially filling the box and surrounding the roots of some of the plants in the box.

Fig. 5 is a schematic illustration of the roots of an unsoiled plant placed in a bag and the mass of intermixed crimped paper strips of Fig. 1 filling the bag and surrounding the roots.

Fig. 6 is a schematic illustration of a plurality of unsoiled plants placed on a pallet and the mass of intermixed crimped paper strips of Fig. 1 surrounding the roots.

Fig. 7 is a schematic illustration of a plurality of the loaded pallets of Fig. 6 being sprayed with water.

Fig. 8 is a schematic top view of an apparatus for making the mass of crimped intermixed paper strips illustrated in Fig. 1.

Fig. 9 is an elevational view of the apparatus illustrated in Fig. 8 as generally seen along Line IX-IX of Fig. 8 but including additional details.

Fig. 10 is an end view of the apparatus illustrated in Fig. 8 as seen along Line X-X of Fig. 9.

Fig. 11 is a side elevational view of the feeding and cutting sections of the apparatus illustrated in Fig. 8 as seen along Line XI-XI of Fig. 8.

Fig. 12 is a fragmentary sectional view of portions of the apparatus illustrated in Fig. 11.

Fig. 13 is a fragmentary top view of the discharge section of the apparatus illustrated in Fig. 11.

Fig. 14 is an enlarged fragmentary view of the cutting area of the apparatus illustrated in Figs. 11.

Fig. 15 is a fragmentary sectional view as seen along Line XV-XV of Fig. 13.

Fig. 16 is a fragmentary sectional view as seen along Line XVI-XVI of Fig. 13.

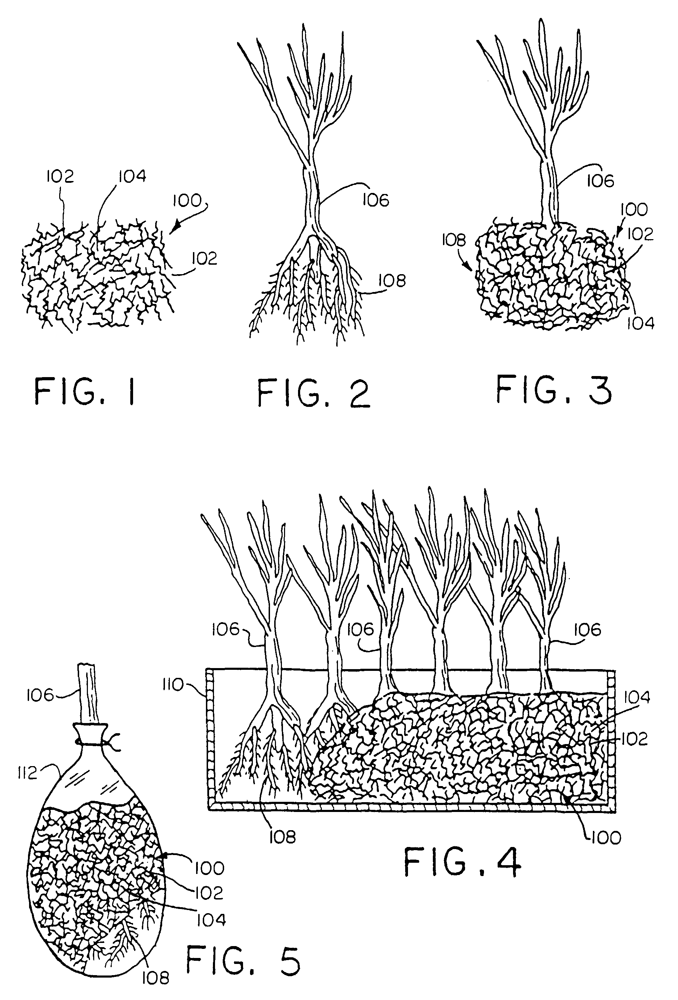

The inventive medium is a plant growth medium, plant storage medium and/or plant shipping medium. This medium, which is illustrated in Fig. 1 and identified generally by the reference numeral 100, comprises a mass of crimped intermixed cellulose paper strips 102. Each of the paper strips 102 has a narrow width, elongated length, and a plurality of transverse folds over the length thereof to provide each strip with a longitudinally compressed construction. That is, each of the strips has an accordion-like construction. The paper strips in the mass are generally intertwined or interconnected with each other. These strips are constructed in such a manner so that they have a tendency to expand, this property making the mass of such strips resilient and providing it with a tendency to resist lateral or side forces. The crimped construction of the paper strips also provides the medium with a plurality of open spaces or air pockets 104 which permit the unsoiled roots stored in the medium to receive oxygen, water and plant growth-enhancing materials or chemicals more readily than if the air pockets were not provided.

In one embodiment, the paper strips 102 have an average width of about $1.59 \times 10^{-3}$m [1/16] to about $1.27 \times 10^{-2}$m [1/2 inch] and in one embodiment about $3.18 \times 10^{-3}$m [1/8] to about $6.35 \times 10^{-3}$m [1/4 inch]. The paper strips 102 have, in one embodiment, an uncompressed length of about $5.08 \times 10^{-2}$m [2] to about $3.05 \times 10^{-1}$m [12] inches, and in one embodiment about $5.08 \times 10^{-2}$m [2] to about $2.54 \times 10^{-1}$m [10] inches. In one embodiment the paper strips have a width of about $3.18 \times 10^{-3}$m [1/8 inch], and an uncompressed length of about $5.54 \times 10^{-2}$m [2.18] or $5.59 \times 10^{-2}$m [2.2 inches] or about $1.14 \times 10^{-1}$m [4.5 inches], or about $2.35 \times 10^{-1}$m [9.25] to about $2.41 \times 10^{-1}$m [9.5 inches]. In one embodiment, the paper strips have a width of about $6.35 \times 10^{-3}$m [1/4 inch], and an uncompressed length of about $5.54 \times 10^{-2}$m [2.18] or $5.59 \times 10^{-2}$m [2.2 inches] or about $1.14 \times 10^{-1}$m [4.5 inches], or about $2.35 \times 10^{-1}$m [9.25 inches] to about $2.41 \times 10^{-1}$m [9.5 inches]. The paper strips 102 have, in one embodiment, about 1 to about 16 transverse folds or creases per inch of uncompressed length, and in one embodiment about 2 to about 8 transverse folds or creases per inch of uncompressed length.

The paper strips 102 can be made of any type of cellulose paper that is water absorbent, ecologically compatible with the plants it is to be used with, and of sufficient strength to form the elongated crimped structures referred to above. The paper should have a moisture of about 50% to about 400%, and in one embodiment about 150% to about 300%. In one embodiment, that paper is sufficiently biodegradable so that it decomposes over a short period of time (e.g., a few days up to about 4 or 5 weeks, and in one embodiment about 1 to about 4 weeks, or about 2 weeks) when plants employing the inventive medium are planted in soil. Examples of suitable types of paper include kraft paper, particularly virgin kraft paper and recycled kraft paper. In one embodiment, the paper has a weight of about 9.08Kg [20] to about 40.86Kg [90 pounds], and in one embodiment about 13.62Kg [30] to about 36.32Kg [80 pounds], and in one embodiment about 18.16 Kg [40 pounds], and in one embodiment about 31.78Kg [70 pounds].

The plant growth-enhancing material can be one or more fertilizers, insecticides, herbicides, and/or fungicides. These plant growth-enhancing materials are applied to paper used to make the paper strips 102 either prior to, during or subsequent to the paper strip making operation, as discussed in greater detail bellow. The growth-enhancing material is water-soluble and is coated on the surface of the paper strips 102 and, in one embodiment, absorbed into the inner structure of the paper strips 102. The plant growth-enhancing material is applied to the paper at a dry weight concentration of about 10 to about 1000 grams of plant growth-enhancing material per kilogram of paper, and in one embodiment about 50 to about 500 grams of plant growth-enhancing material per kilogram of paper, and in one embodiment about 100 to 400 grams of plant growth-enhancing material per kilogram of paper.

The fertilizer can be a nitrogen-containing fertilizer, a phosphorous containing fertilizer, a potassium-containing fertilizer, or a fertilizer that contains two or more of nitrogen, phosphorous and/or potassium. Thus, in one embodiment,

## EP 0 817 564 B1

the fertilize comprises nitrogen, $P_2O_5$, $K_2O$, or a mixture of two or more thereof. The nitrogen source can be ammonia, ammonium nitrate, ammonium sulfate, ammonium sulfate nitrate, calcium ammonium nitrate, urea, calcium nitrate, sodium nitrate, calcium cyanamide, ammonium chloride, or a mixture of two or more thereof. In one embodiment, the fertilizer is a 20-20-20 fertilizer (that is, a fertilizer containing about 20% by weight nitrogen, about 20% by weight $P_2O_5$, and about 20% by weight $K_2O$).

In one embodiment, the fertilizer is a controlled-release fertilizer. Some properties and mechanisms that provide a measure of controlled-release are low solubility; resistance to attack by soil bacteria (urea-aldehyde reaction products); coating soluble materials to provide a barrier to rapid dissolution; and application with the fertilizer of other materials that inhibit nitrification, denitrification, or urease activity. Examples of such fertilizers include urea-formaldehydes (ureaforms), isobutylidene diurea, crotonylidene diurea, and sulfur-coated urea.

In one embodiment, the fertilizer is a wet process super phosphoric acid (SPA), normal super phosphate (NSP) or triple super phosphate (TSP). Each of these types are known in the art.

SPA is used in liquid fertilizers and is produced by two methods: vacuum evaporation and submerged-combustion direct heating. With both methods, the evaporators are fed with 50-54% $P_2O_5$ acid, which is usually desludged. When the feed acid is made from calcined rock, the product acid is green, but otherwise it is black. Liquid fertilizers are made from SPA because of its capacity for sequestering metallic impurities.

NSP, also called ordinary and single super phosphate, is produced by the reaction of phosphate rock with sulfuric acid. The method quickly yields a solid mass containing monocalcium phosphate monohydrate and gypsum, according to the following simplified equation:

$$Ca_{10}F_2(PO_4)_6 + 7H_2SO_4 + 3H_2O \rightarrow 3CaH_4(PO_4)_2 \cdot H_2O + 7CaSO_4 + 2HF$$

Important properties of NSP are free acid content, as $H_2SO_4$, 1-2%; moisture content, 5-8%; citrate-soluble $P_2O_5$, in neutral citrate solution, 20-21 %; hygroscopicity at 30°C, 94% relative humidity; and bulk density, nongranular, 0.8 g/cm$^3$, and granular, 0.97 g/cm$^3$.

TSP is a high analysis phosphate fertilizer, containing 45-47% $P_2O_5$, compared to 20% $P_2O_5$ in NSP. TSP is essentially impure monocalcium phosphate monohydrate ($CaH_4(PO_4)_2 \cdot H_2O$) made by acidulating phosphate rock with phosphoric acid according to the following reaction:

$$Ca_{10}F_2(PO_4)_6 + 14H_3PO_4 + 10H_2O \rightarrow 10CaH_4(PO_4)_2 \cdot H_2O + 2HF$$

Phosphate rock and wet-process phosphoric acid are the raw materials for manufacturing TSP. The grade of rock can be a little lower than that needed for NSP production.

In one embodiment, the fertilizer comprises potassium chloride, potassium sulfate, potassium nitrate or potassium phosphate. The fertilizer can comprise calcium, magnesium, sulfur, iron, manganese, copper, zinc, boron, molybdenum, or a mixture of two or more thereof.

In one embodiment, the fertilizer comprises monammonium phosphate, diammonium phosphate, ammonium polyphosphate, nitrophosphate or a mixture of two or more.

The insecticide that can be used can be inorganic or organic, natural or synthetic. Any insecticide known in the art that is not harmful to the plant being treated or, in the case wherein the plant or fruits or other products from the plant will be consumed, the ultimate consumer of the plant will not be harmed. Examples include lindane, methoxychlor, Dilan, chlorodane, heptachlor, endrin, toxaphene, endosulfan, Kepone, mirex and Perthane. Also useful are the organic phosphorous insecticides and the carbamate insecticides such as carbaryl. Useful insecticides also include diflubenzuron, pyrethrum, allethrin, dimethrin, fenothrin, resmethrin and tetramethrin.

The herbicide can be any chemical that destroys or inhibits the growth of weeds or other undesirable vegetation. Examples include the aryloxyalkanoic acids (e.g., 2,4-D, 2,4-DB, dichloroprop, MCPA, MCPB, mecoprop), s-triazines (e.g., atrazine, simazine, promtryn, cyanazine, terbutryn), urea herbicides (e.g., monouron, diuron, fluometuran, linuron, siduron, chloroxuron), carbamates (e.g., isopropylphenylcarbamate, isopropyl-3-chlorophenylcarbamate, s-ethyl dipropylthiocarbamate), amide herbicides (e.g., propanil, diphenamid, alachlor, naptalam, propachlor), chlorinated aliphatic acids (e.g., trichloroacetic acid, 2,3,6-trichlorophenyl acetic acid), chlorinated benzoic acids (e.g., chloramben, dicamba, dichlobenil), phenols (e.g., 2,6-dibromo-4-cyanophenol), substituted dinitroanilines (e.g., N,N-dipropyl-2,6-dinitro-4-trifluoromethylaniline), bipyridinium herbicides (e.g., diquat and paraquat salts), 4-amino-3,5,6-trichloropicolinic acid, 3-amino-s-triazole, N-(phosphonomethyl) glycine, uracils (e.g., bromacil, isocil, terbacil), diphenyl ethers, and inorganic herbicides (e.g., sulfamic acid, ammonium sulfamate, boron compounds, arsenical compounds, sodium chlorate).

The fungicides can be any of known synthetics and biosynthetics used to control fungal diseases in plants.

Examples include the $C_1$-$C_{10}$ fatty acids (e.g., formic acid, acetic acid, capric acid), quinones (e.g., chloranil, dichlone), organic sulfur compounds (e.g., dithiocarbamates, tetramethylthiuram disulfide, disodium ethylenebisdithiocarbamate, nabam, maneb), imidazolines and guanidines (e.g., heptadecyl-2-imidazolinium acetate, dodecylguanidinium) trichloromethylthiocarboximides (e.g., captan, folpat), chlorinated nitrated benzenes (e.g., 2,3,4,6-tetrachloro nitrobenzene, pentachloronitrobenzene, 1,2,4-trichloro-3,5-dinitrobenzene, 1,3,5-trichloro-2,4,6-trinitrobenzene, hexachlorobenzene, tetrachloroisophthalo nitrile) oxathiins (e.g., 2,3-dihydro-5-carboxanilido-6-methyl-1,4-oxathiin), benzimidazoles (e.g., 2-(4-thiazoyl) benzimidazole, methyl (1-butylcarbamoyl)-2-benzimidazolylcarbamate), pyrimidines (e.g., 5-butyl-2-dimethyl amino-6-methyl-4(1H)-pyrimidinone, and the 2-ethyl amino anologue thereof (ethirmol)), dinocap, fenamenosulf, and actidone.

Referring to Figs. 1-3, the mass of treated crimped cellulose paper strips 100 is used for storing, transporting and/or growing plant 106, the roots 108 of which are unsoiled. Plant 106 can be any rooted plant, examples of which include fruit trees, dogwood trees, willow trees, tomato plants, flowers, outdoor shrubbery, indoor plants, and the like. Examples also include the following woody plant species:

| Common Name | Scientific Name |
| --- | --- |
| Shumard Oak | Quercus shumardii |
| Sawtooth Oak | Q. accutissima |
| Chinkapin Oak | Q. muehlenbergii |
| Pin Oak | Q. palustris |
| Shingle Oak | Q. imbricaria |
| Swamp White Oak | Q. bicolor |
| Blackgum | Nyssa sylvatica |
| Carolina Silverbell | Halesia Carolina |
| Sweetbay Magnolia | Magnolia virginiana |

Additional examples include variegated pittsoporum tobira and ilex crenata (Japanese holly). Prior to or during the packing of the mass of crimped paper strips 100 around the unsoiled roots 108, the mass 100 is wetted to a moisture content that is sufficiently high enough to provide the roots with the required amount of moisture, but low enough to avoid unnecessary shipping or handling costs due to excess or unneeded water. In one embodiment, the moisture content is from about 50% to about 300% by weight, and in one embodiment about 150% to about 250% by weight based on the dry weight of the mass 100. The plant 106 illustrated in Fig. 3, which has its unsoiled roots 108 packed in the wetted mass 100, can be stored or transported, or it can be planted in soil for growing. When planted in soil for growing, the paper used in making the mass 100 is, in one embodiment, biodegradable such that within a short period of time (e.g., a few days up to 4 or 5 weeks, and in one embodiment about 1 to about 4 weeks, and in one embodiment about 2 weeks) the paper degrades and becomes part of the soil.

Once the unsoiled roots 108, of the plant 106 are packed with the wetted mass 100, the packed plant 106 may be stored to await shipping or it may be immediately shipped to another location (i.e., a wholesale grower, a plant retailer, or a mail order consumer). This shipment usually entails compiling a plurality of the packed plants 106 in a box 110, as illustrated in Fig. 4, and then shipping the box 110 to the desired location. At the desired location, the packed plant 106 can be replanted, either by being inserted directly in the ground or by being potted, depending on the circumstances. With particular reference to plant retailers, such retailers may place the packed roots 108 in a bag 112, as illustrated in Fig. 5, for short term consumer transporting purposes.

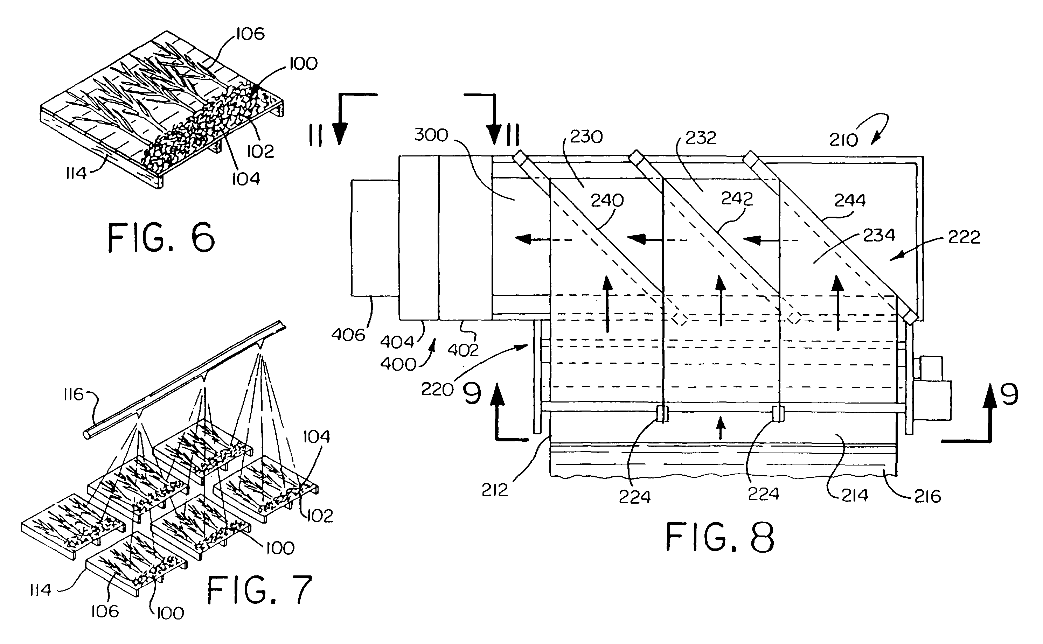

Alternatively, as illustrated in Figs. 6 and 7, the packed plants 106 may be temporarily stored (e.g., about 2 to about 4 months) in a dormant environment in preparation for the next suitable planting season. During this temporary storage (sometimes called "cold storage") the packed plants 106 are stacked on pallets 114 and maintained at a suitable temperature (e.g., about 35°F (1.7°C) to about 60°F (15.6°C), and in one embodiment about 40°F (4.4°C). Also, a sprinkling system 116 is usually provided to periodically "re-wet" the packed plants 106. In one embodiment, re-wetting is required about every 3 or 4 days. At the termination of the storage period, the packed plants 106 may be shipped to another location as discussed above.

In one embodiment, the treated crimped cellulose paper strips 100 are used as a growth medium and the plant is transplanted into such growth medium and allowed to grow with periodic watering as required. In this embodiment, the plant roots can be soiled or unsoiled. The unsoiled roots can be packed in the wetted mass 100 as discussed above. The paper that is used is preferably biodegradable such that within a short period of time (e.g., a few days up to 4 or 5 weeks, and in one embodiment about 1 to about 4 weeks, and in one embodiment about 2 weeks) the paper degrades and becomes part of the surrounding soil.

In one embodiment, the mass 100 of crimped paper strips 102 is made using the apparatus and methods disclosed in either of U.S. Patents 5,088,972; 5,134,013; or 5,173,352. The paper sheet material that is converted to paper strips using the apparatus and methods disclosed in these patents is, in one embodiment, initially treated with the plant growth-enhancing material provided for in accordance with this invention. The plant growth-enhancing material is applied to the paper sheet material at a dry weight concentration of about 0.01 Kg (10 g) to about 1 Kg (1000 grams) of growth-enhancing material per kilogram of paper, and in one embodiment about 0.05 Kg 50 to about 0.5 Kg (500 grams) of growth-enhancing material per kilogram of paper, and in one embodiment about 0.1 Kg 100 to about 0.2 Kg (200 grams) of plant growth-enhancing material per kilogram of paper. The plant growth-enhancing material is applied to the paper sheet material by spraying the paper with an aqueous solution of the plant growth-enhancing material, by dipping the paper sheet material in an aqueous solution of the plant growth-enhancing material, or by using rollers to apply an aqueous solution of the plant-growth material to the paper sheet material. The concentration of plant growth-enhancing material in the aqueous solution used for spraying, dipping or rolling can range up to the saturation point of the plant growth-enhancing material in the water or higher, and in one embodiment can range from about 0.05 Kg (50 g) to about 1 Kg (1000 grams) of plant growth-enhancing material per liter of water, and in one embodiment about 0.2 Kg (200) to about 0.6 Kg (600 grams) per liter.

In one embodiment, the apparatus and method for making the mass of crimped paper strips 100 are illustrated in Figs. 8-16. Referring to Fig. 8, the mass of crimped cellulose paper strips 100 is made using the apparatus 210. Apparatus 210 includes a feed section 212 for supplying a large quantity of sheet paper 214 from a roll 216. The method of mounting and exchanging such large rolls 216 is well known in the paper art. In apparatus 210, roll 216 includes sheet paper 214 having a transverse width of about 1.52 m (60 inches). The sheet paper 214 is slit into three separate longitudinal segments 230, 232, 234 and then redirected to provide a three-layered paper material 300 for advancement toward machine 400. Machine 400 includes a feeding section 402, a cutting section 404 and a discharge section 406.

The sheets of paper 214 can be pretreated with plant growth-enhancing material by applying an aqueous solution of plant growth-enhancing material to the paper using the spraying or dipping procedures discussed above. Alternatively, the plant growth enhancing material can be applied to the paper during the cutting and crimping process, as discussed below. In either event, the plant growth-enhancing material is coated on the surface of the paper and, in one embodiment, absorbed into its interior structure.

The large sheets of paper 214 are directed from the lower portion of the rolls 216 around a lower guide roller 260 through a wetting or moistening system 220. From the moistening system 220, the sheet paper 214 is directed further upwardly to layering device 222 for longitudinally cutting and layering the sheet paper 214. The layering device 222 includes two longitudinal cutters 224 which divide the sheet paper 214 into three longitudinal segments 230, 232, 234. The longitudinal segments 230, 232, 234 are respectively reoriented about diagonal bars 240, 242, 244. The reorientation of the segments 230, 232, 234 result in a layering thereof to form combined layers of paper material 300. The paper material 300 is then directed to the machine 400 for formation of the mass of crimped paper strips 100.

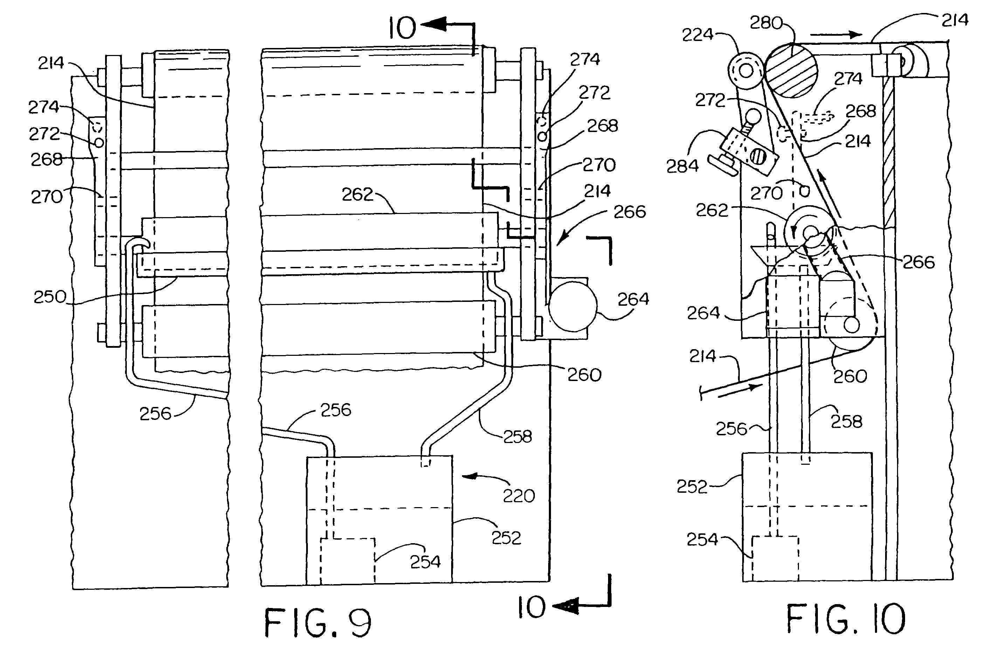

As seen in Figs. 9 and 10, the wetting or dampening system 220 includes an elongated open container 250 which extends throughout the length of the sheet paper 214 passing thereby. A continuous supply of water is provided to the container 250 from a reservoir 252 having a supply pump 254 with an associated supply line 256. The water added to the container 250 is allowed to overflow through a return line 258 at the other end thereof. Consequently, fresh water may be added to the container 250 with the excess water being returned to the reservoir 252.

To transfer the water in the container 250 to the sheet paper 214, the paper 214 is first directed around the lower guide roller 260 at the lower region of the wetting and dampening system 220. The sheet paper 214 passing from the guide roller 260 to the longitudinal cutters 224 of the layering device 222 is directed by a wetting roller 262. The wetting roller 262 is mounted to extend into the water within the container 250 and to be rotated by a motor 264 and associated drive mechanism 266. The drive mechanism 266 includes a drive timing pulley at the output of the motor 264 and a driven timing pulley at the end of the wetting roller 262 with a timing belt extending therebetween. The motor 264 includes a mechanism for varying the speed thereof to regulate the rotation of the wetting roll 264 in a direction indicated by the arrow with the movement of the sheet paper 214 thereby. The rotation of the wetting roller 262 causes water in the container 250 to be deposited on the cylindrical surface thereof and then transferred to the sheet paper 214 as it passes over the cylindrical surface of the wetting roller 262. The actual position of the wetting roller 262 can be adjusted through the movement of the end mounts 268 which are shown in Figs. 9 and 10 but omitted from Fig. 8. The end mounts 268 can be adjustably rotated about a pivot 270 through the positioning of an adjustment bolt 272 in opposition to biasing spring 274. As a result, the amount of water being added to the sheet paper 214 can be adjusted. The increase in speed of the motor 264 would result in faster rotation of the wetting roller 262 to transfer more water to the sheet paper 214. Additionally, by the selective movement of the end mounts 268, greater pressure can be applied to the sheet paper 214 passing over the cylindrical surface of the wetting roller 262 for further insuring that water is directed to the sheet paper 214 to increase the moisture thereof.

The moistened sheet paper 214, as seen in Fig. 10, upon passing by the wetting roller 262 is directed upwardly to the adjustable longitudinal cutters 224 for reorientation about a backing roller 280. Each of the longitudinal cutters is mounted on a rod 262 extending along the entire length of the sheet paper 214. An adjusting mechanism 284 can be utilized to increase the pressure on each cutter 224 to insure a full longitudinal cut of the moistened sheet paper 214. Each of the longitudinal cutters 224 is aligned with a urethane surface portion (not shown) in order to provide an appropriate backing for the cutting action produced by the longitudinal cutter 224.

With the sheet paper 214 being moistened by the deposit of water thereon, each of the longitudinal segments 230, 232, 234 of paper are moistened prior to their being advanced around the diagonal bars 240, 242, 244. As the segments are rejoined for advancement to the machine 400, they form the three layers of the moistened paper material 300.

In one embodiment, the growth-enhancing material is dissolved in the water that is applied to the paper strip 214 using the moistening system 220. The plant growth-enhancing material is conveniently dissolved in the water reservoir 252, and the desired concentration of growth-enhancing material in reservoir 252 is monitored and maintained using conventional means (not shown in the drawings). The concentration of plant growth-enhancing material in the reservoir ranges from about 50 to about 1000 grams per liter, and in one embodiment about 200 to about 600 grams per liter.

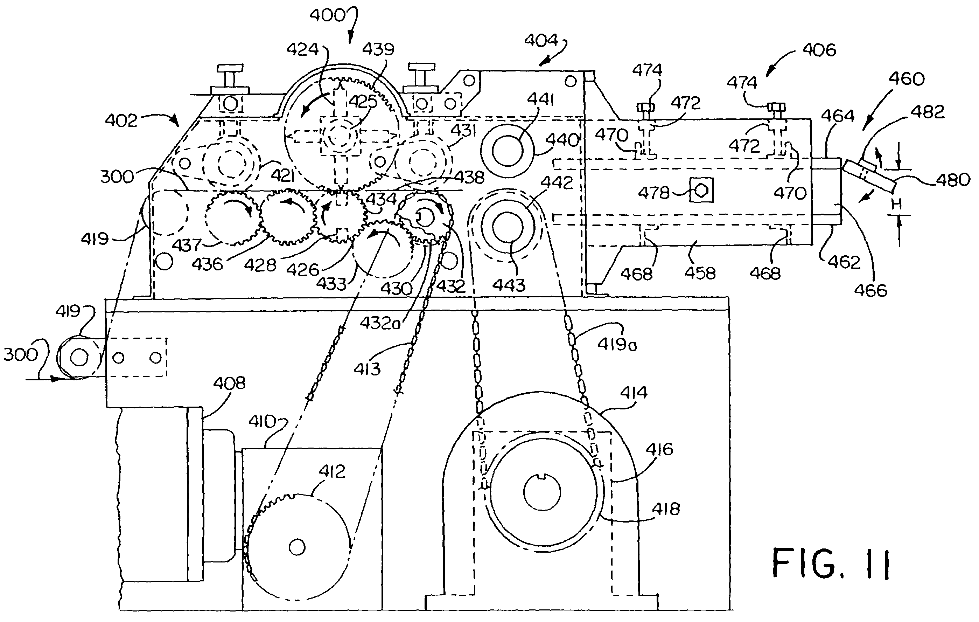

As seen in Figs. 11-14, machine 400 includes the feeding section 402, the cutting section 404 and the discharge section 406. The feeding section 402 is configured to feed one or more sheets of paper material 214 to the cutting section 404 to be longitudinally cut thereby. The paper strips cut by the cutting section 404 are then discharged from the cutting section 404 to the discharge section 406 and allowed to dry.

To provide basic power to the machine 400, a feeding motor 408 is included in the feeding section 402. The feeding motor 408 has an associated reduction gear section 410 with a reduction gear output in the form of a drive sprocket 412. For powering the cutting section 404, a cutting motor 414 is provided with an associated reduction gear section 416. The output of the reduction gear section 416 is in the form of a drive sprocket 418.

To initiate the operation of the machine 400, the moistened paper material 300 is supplied from the supply section 12 to provide one or more layers of the moistened paper material 300 to the feeding section 402. As seen in Fig. 11 the material 300 is initially directed for alignment through redirecting rollers 419. Although not specifically duplicated in Fig. 11, as discussed above, three layers of the moistened paper material 300 are preferably provided by the supply section 212.

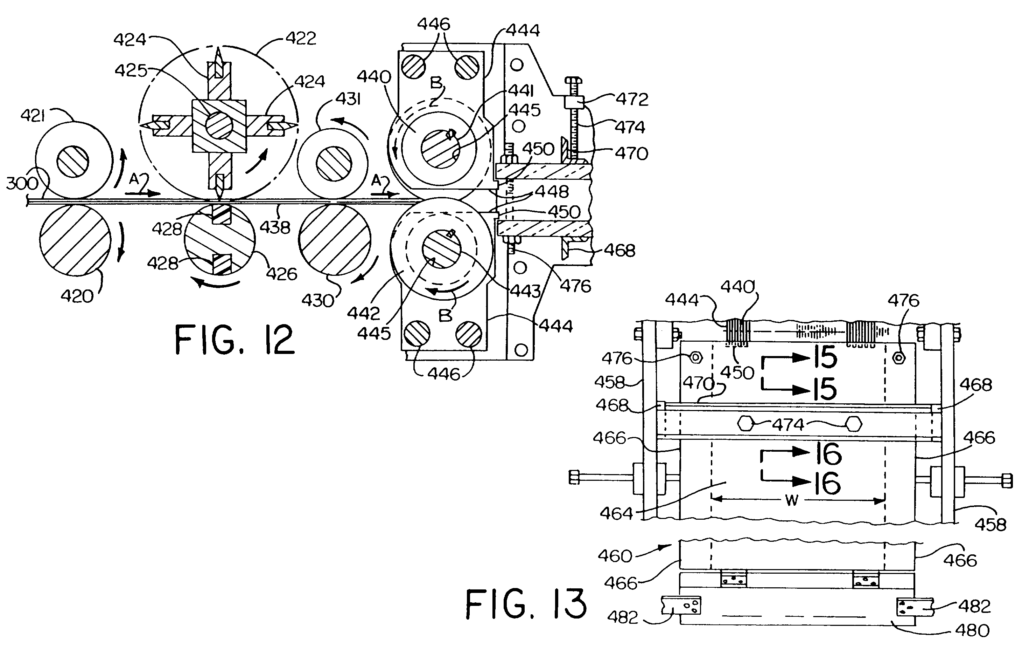

As seen in Fig. 12, the feeding section 402 is configured for longitudinally advancing the moistened paper material 300 in a first direction A. A first drive roller 220 feeds the moistened paper material 300 to a transverse cutting component 422. The transverse cutting component 422 includes four rotating cutting blades 424 which are mounted for rotation on a shaft 425. A backup cylinder 426 is in alignment with the shaft 425 and includes neoprene sections 428 for specific alignment and cooperation with the blades 424.

Although not shown in the figures, each of the blades 424 includes a generally serrated edge but also includes several gaps along the lengths thereof in order to provide only a partial cut of the moistened paper material 300 as it is transferred thereunder. With the moistened paper material 300 being only partially cut to define sheets 438 which are partially attached to the remainder of the material 100, it is advanced to a second drive roller 430 for further direction to the cutting section 404. To maintain the moistened paper material 300 and sheets 438 in position for advancement to the transfer cutting component 422, a first biased roller 421 is biased toward and in alignment with the first drive roller 420. A second biased roller 431 is biased toward and in alignment with the second drive roller 430.

The first drive roller 420, the backing cylinder 426 and the second drive roller 430 all rotate at the same rotational speed. Each of the components in the feeding section 402 are, in one embodiment, greater than $5 \times 10^{-1}$ m (20 inches) wide in order to provide the moistened paper material 300 to the cutting section 404 which, as will be seen, is also capable of accommodating paper material $5 \times 10^{-1}$ m (20 inches) wide. The first drive roller 420 is knurled or rough to provide sufficient friction for advancing the moistened paper material 300 therethrough while the second drive roller 430 is smooth. Additionally, the second drive roller 430 has a slightly larger diameter than the first drive roller 420 in order to keep the moistened paper material 100 tight for proper partial cutting by the transverse cutting component 422. Because of the smooth surface for roller 430, the additional tension created by the slightly larger second drive roller 430 is not sufficient to actually tear or separate the resulting sheets 438 of moistened paper material 300 from the remainder thereof simply by the action of the drive rollers 420, 430.

The mechanism for providing the rotation of the first drive roller 420, the cutting blade shaft 425, the backing cylinder 426, and the second drive roller 430 is shown in Fig. 11. With the basic power being provided by the feeding motor 408, the second drive roller 430 includes a driven sprocket 432 rigidly mounted on the end thereof for driving connection with a chain drive 413 from the drive sprocket 412. A gear 432a on the shaft of the second drive roller 430 is in engagement with and rotates a first idler gear 433 mounted on the side housing of the feeding section 402. The first idler gear 433 is in turn in engagement with a gear 434 associated with backing cylinder 426. The gear 434 is in engagement with a second idler gear 436 and with a larger gear 439 connected to the rotating shaft 425 of the cutting blades 424. The gear 439 has a diameter which is twice that of the gear 434 in order to produce rotation of the shaft 425 at one half of the speed of the backing cylinder 426. Consequently, the four cutting blades 424 are brought into alignment with the two neoprene sections 428 of the backing cylinder 426 as they rotate at correspondingly different speeds. The second idler gear 436 is in engagement with and rotates the drive gear 437 on the end of the first drive roller 420. With the directional rotation of each sprocket and gear as indicated by the small arrows on Figs. 11 and 12, it can be seen th'at the layers of the moistened paper material 300 are fed towards the cutting section 404 by the feeding section 402.

In an alternative configuration, the gearing could be altered to allow the backing cylinder to have a larger diameter so that there could be included three neoprene sections thereon. The larger backing cylinder could provide greater stability throughout the width of the machine as there is being produced the desired transverse cut by the cutting blades extending transversely of the moistened paper material 300 as it advances longitudinally through the feeding section.

In one embodiment of machine 400, the feeding motor 408 is a variable speed motor with the reduction gear section 410 having a reduction gear ratio of 10:1. The motor 408 is set to produce a feeding of the moistened paper material 300 having a width of about 20 inches at a speed of about $1.04 \times 10^2$ m (360 feet) per minute. The spacing of the cutting blades 424 around the shaft 425 is such that the partial cut is produce every $1.17 \times 10^{-1}$ m (4.4 inches) along the length of the moistened paper material 300. Accordingly, sheets 438 of moistened paper material 300 to be longitudinally fed to the cutting section are $5.08 \times 10^{-1}$ m (20 inches) wide and $1.17 \times 10^{-1}$ m (4.4 inches long).

The cutting section 404, as best seen in Figs. 11, 12, 13 and 14, includes an upper and lower set of overlapping cutting discs 440, 442. The upper cutting discs 440 are fixedly mounted for rotation on a shaft 441 while the lower cutting discs 442 are fixedly mounted for rotation on a shaft 443. The lower shaft 443 includes a driven sprocket (not shown) and is connected by a chain 419a to the drive sprocket 418 of the cutting motor 414. The shafts 441, 443 are coupled by matching gears (not shown) for corresponding rotation in the opposite direction as generally indicated by the arrows B. The overlapping and interengagement of the discs 440, 442 are such that adjacent cutting discs 440, 442 on their respective shafts 441, 443 are separated one from the other for receipt of a cutting disc 442, 440 on the other shaft 443, 441 therebetween. The array of overlapping cutting discs 440, 442 are capable of receiving therebetween each sheet 438 of the moistened paper material 300, whether there is one or more layers, from the feeding section 402. Once directed between the cutting discs 440, 442, the sheets 438 are longitudinally cut, in the direction A, into moistened strips with each moistened strip including a corresponding number of layers as the original sheets 438 supplied by the feeding section 402.

The sheets 438 are generally cut to form elongated moistened strips associated with each cutting disc 440, 442. The cuts are produced between the side edges of each cutting disc 440 and the adjacent side edges of the adjacent cutting disc 442. The moistened strips produced by the cutting discs 440, 442 are generally maintained in alignment for passage through the cutting section 404 by an array of combers 444 associated with each set of cutting discs 440, 442.

Each comber 444 includes a central opening 445 for receipt of the corresponding shaft 441, 443 therethrough. The combers on one shaft 441, 443 are laterally or transversely aligned with corresponding cutting discs 442, 440 on the other shaft 443, 441. Each comber 444 is mounted on and supported by transverse bars 446 extending across the cutting section 404 through corresponding holes in the end of the comber 444. Despite the support by the rods 446, the combers 444 are capable of limited movement along the shafts 441, 443 in the same manner as the cutting discs 440, 442.

Each of the combers 444 includes an end face 448 in alignment with the corresponding cutting disc 440, 442 on the opposite shaft 441, 443. The configuration of cutting discs 440, 442 and aligned end faces 448 of the combers 444 produces a general region for restricted movement of the moistened strips formed by the cutting section 404 as the sheets 438 pass therethrough. The aligned end face 448 terminates at an extension 450 of each comber 444 at the discharge side of the cutting section 404.

The cutting section 404 is powered by the motor 414 with variable speed control and includes the reduction gear 416 with a mix to one reduction ratio. In one embodiment, each of the cutting discs 440, 442 is about 1/8-inch wide. Accordingly, each cutting shaft 441, 443 includes at least 80 cutting discs 440, 442 thereon to provide a total of at least 160 cutting discs 440, 442 for the two sets to produce the desired cutting of the sheets 438 which are 20 inches wide. In one embodiment, the speed of the motor 414 is adjusted to provide a speed at the outer cylindrical surface of each cutting disc 440, 442 of about 380 feet per minute. In other words, the cutting discs 440, 442 are rotating at a linear speed faster than the second drive roller 430. As a result, the faster speed of the cutting discs 440, 442 causes them to grab the sheets 438 as they enter therebetween and causes each sheet 438 to be pulled from its following adjacent sheet 438 to separate the partially cut sheets 438 for advancement through the cutting section 404. As seen in Fig. 12, the separation has not yet occurred and tends to occur as the sheet 438 is leaving the second drive roller 430. It is desirable for the drive roller 430 to maintain contact with the following adjacent sheet 438 in order to maintain the tension on the material for transverse cutting. Consequently, each sheet 438, whether having a single or multiple layer of moistened paper material 300, will be longitudinally cut into the moistened strips in the cutting section 404 prior to the entrance of the next available sheet 438 into the cutting section 404.

It should be clear, from the discussion provided hereinabove, that the machine 400 also includes mechanism for restricting the movement of the moistened strips after their formation in the cutting section 404. Accordingly, the discharge section 406 is aligned with the cutting section 404 and primarily includes a discharge chute 460. The discharge chute 460 is maintained in position by framing 458 which is secured at opposite sides of the cutting section 404. The discharge chute 460 is, in one embodiment, formed of Plexiglas or a similar durable clear plastic material.

The discharge chute 460 includes a lower wall 462 and an upper wall 464 with two side walls 466 therebetween. To support the discharge chute 460, a pair of lower brackets 468 are secured to the framing 458 to receive and support the lower wall 462 thereon. The leading end of each side wall 466 is movably secured between the lower wall 462 and the upper wall 464 by bolts 476. To apply pressure to the lower wall 462 and the upper wall 464 for complete retention of the side walls 466 therebetween, there is provided adjustable bracketing at the top of the framing 458 for creating a downward force on the upper wall 464. Specifically, brackets 470 extend across the top surface of the upper wall 464 and are maintained in place by adjustable bolt mechanism 474 which extends through a rigid bar 472 secured between the side framing 458. The bolt mechanism 474 is intended, through the brackets 470, to apply reinforcing pressure to the upper wall 464 and the lower wall 462 while also providing significant frictional force on the upper and lower surfaces of the side walls 466.

This mechanism for applying pressure to the side walls 466 is significant when it is understood that discharge chute 460 can be adjusted to accommodate sheets of moistened paper material having different widths as the moistened strips formed thereby are discharged from the cutting section 404. In other words, the discharge section 406, as shown in Fig. 13, is intended to receive the strips formed from sheets of moistened paper material which are, in one embodiment, about 20 inches wide. However, the feeding section 402 and the cutting section 404 could reasonably accommodate sheets of material as narrow as, in one embodiment, about 15 inches.

To provide for proper discharge through the discharge section 406, chute 460 must be adjusted for producing sufficient resistance to the moistened strips discharged from the cutting section 404. To provide for increased resistance in the discharged section 406, the mounting of the side walls 466 by the bolt mechanism 476 allows the trailing end of each side wall 466 to be rotated to cause the discharge chute 460 to have a narrowing profile. If the side walls 466 are to be configured with a narrower profile for the fabrication of strips from narrower sheets of moistened paper material, the bolts 474 can be loosened to reduce the pressure between the brackets 468, 470. With the force reduced on the upper wall 464 and the lower wall 462, each side wall 466 can be rotated about its respective bolt mechanism 476. To provide proper adjustment to the side walls 466, each frame 458 is provided with adjustable bolt mechanism 478 for controlled positioning of the side walls 466 about the bolt mechanism 476. Although the side walls 466 are shown to be parallel in Fig. 13, for the accommodation of sheets of moistened paper material which are, in one embodiment, about 20 inches wide, if the sheets of moistened paper material were as narrow as, in one embodiment, 15 inches, the bolts 478 could be inwardly adjusted to cause the trailing end of the discharge chute 460 to be significantly narrowed to about 15 inches. The resulting narrowing profile can create a reduced volume for the collecting of the moistened strips therein and for providing significant restrictions on all of the moistened strips being discharged therethrough.

Further restriction to the passage of the moistened strips through the discharge chute 460 can be provided by the adjustable gate 480 at the output end thereof. The gate 480 is hingedly coupled to the upper wall 464. Bracketing 482 at the opposite ends of the gate 480 can be used for manual or automatic control (not shown) for the proper positioning of the gate 480. As mentioned above, the gate 480, during continued production of the paper strips of the present invention, need not always be in a closed and restricting position. In other words, once the gate 480 is closed to produce sufficient collecting of the paper strips within the interior of the discharge chute 460, the general friction created by the paper strips through the discharge chute 460 may be sufficient to cause adequate restrictions at the discharge of the cutting section 404 to produce the desired crimping to the strips as described hereinbelow.

In one embodiment, the discharge chute 460 has an internal height H of about 2 inches and internal width W which can be varied between about 15 and 20 inches. Because of the significant pressure and forces which are generated within the discharge chute 460, the lower wall 462 and the upper wall 464 have a thickness of about 3/4-inch while each of the side walls 466 have a thickness of about 1-1/2-inches. While the length of the discharge chute is, in one embodiment, about 12 inches, the length could be selected depending on the type of material being employed to produce the paper strips. The height of 2 inches allows the extensions 450 of each comber 444 to be loosely positioned within the interior of the chute 460 to produce a better transition from the cutting section 404 to the discharge section 406.

While the discharge chute 460 is configured for allowing adjustment of the internal width depending on the size of the sheets of material provided thereto, it should be noted that a different, simplified configuration could be employed if the machine is intended to continuously receive sheets having the same width. For example, the entire discharge chute may be formed with rigid and firmly joined top, bottom and side walls. Additionally, the bottom wall of such a discharge chute could be inclined to slope downwardly from a middle region of the discharge chute to assist in the transition of the completed packing material as it is being discharged from the end of the discharge chute.

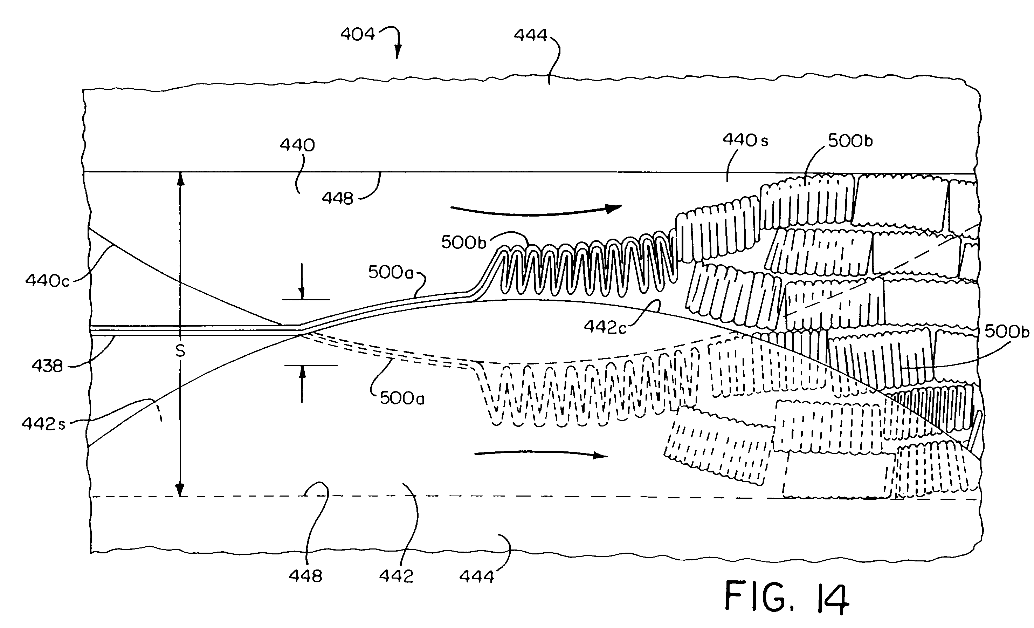

Figs. 11, 12 and 13, do not include any representation of the paper strips being formed thereby. However, the enlarged fragmentary view of Fig. 14 includes a representation of what is believed to occur within the interior of the cutting section 404. It should be understood that machine 400 produces an extremely packed and tight array of moistened strips which undergo expansion, relaxation and intermixing in the discharge chute 460 and after leaving the discharge chute 460. The mass of tightly mixed and interconnected paper strips are produced in such a compacted form that actual identification of the orientation and configuration of the various moistened strips within the cutting section 404 and discharge section 406 is difficult. However, as presently understood, a representation of the mass of crimped paper strips that is useful with the invention as it is being formed in the machine 400, is provided in a schematic form in Figs. 14-16.

Generally, it should be recognized that the moistened paper material for the formation of the mass of crimped paper strips includes a natural resilience with a tendency to resist folding. The cellulose paper used with the invention has a tendency to remain in a straightened form and to resist any folds or bends thereof. This principle can be readily observed by simply taking a small sheet of paper and trying to fold it in half. If one attempts to apply pressure to the fold to impart a folded memory to the sheet material, it is not uncommon for the fold to "relax" as the two halves of the paper tend to naturally separate because of the original "memory" in the paper tending to resist the fold. The same principle can also be observed if several layers are also folded at the same time.

While this condition is apparent for dry paper, it has been found that moistened paper tends to react in the same general manner but to a different degree. In other words, if the paper is slightly moistened, less force may be required to initially apply the pressure to the fold to impart a folded memory to the moistened sheet material. Additionally, when the fold relaxes as the two halves of the papers tend to naturally separate because of the original "memory" in the paper, the separation is to a lesser degree than that produced in the dry paper. Additionally, because the separation is to a lesser degree, the fold tends to be more stable and, as the paper dries, tends to retain a smaller angle at the fold than would be accomplished over the same period of time at a fold formed in the drier sheet material.

While the present invention includes a mechanism for providing water to the paper material to provide moisture thereto, it should be recalled that the natural humidity at the production site could include some moisture in the air and thus in the paper material. Consequently, the general humidity at the facility could result in a mass of crimped paper strips having preferred characteristics, or on the other hand, could result in a detrimental situation with the paper strips having less desired characteristics. While it should be clear that the adjustment of the gate 480 could affect the formation and characteristics of the folds in the paper strips, clearly, the inclusion of moistened paper material enables the desired characteristics to be more simply and readily produced. Further, the inclusion of a mechanism for adjusting the amount of moisture within the paper material allows convenient and reliable reproduction of the desired paper product in different facilities even though the different facilities may have different humidity conditions therein.

Throughout the remainder of the description provided hereinbelow, it should be noted that each of the folds produced in the paper strips are, at least initially, quite tight so that the adjacent longitudinal portions of the moistened strips tend to lie in close contact. However, as will be seen, as pressure on each of the strips is relaxed, the folds will have a natural tendency to expand or relax to cause the portions adjacent to folds to angularly separate.

As seen in Fig. 14, the moistened sheets 438, as they advance between the cutting wheels 440, 442, are initially cut at the side edges thereof to form initial moistened strips 500a which tend to lie along the smooth, outer cylindrical surface 440c, 442c of the respective cutting wheels 440, 442. The initial moistened strips 500a are constantly being advanced, at least partially, by the rotating surface 440c, 442c toward the discharge side of the cutting section 404.

However, significant resistance to each of the initially formed moistened strips 500a is provided by a collection of previous formed moistened strips in the discharge section 406 which is discussed hereinbelow. It is sufficient initially to understand that a plurality of previously formed strips are tightly collected at the discharge side of the cutting section 404. Consequently, as each initially formed moistened strips 500a is advanced through the cutting section 404 by each of the cutting discs 440, 442 applying frictional force thereto, the resistance at the end thereof causes the initially formed moistened strips 500a to be sequentially folded to provide a longitudinally compressed strips 500b. The longitudinally compressed strips 500b are formed inherently within the cutting section 404 by previously formed and fully longitudinally compressed strips 500b collecting at the discharge side thereof.

It is generally not possible to stop the machine 400 and examine the area adjacent the cutting discs 440, 442, to see the exact location of the fully longitudinally compressed strips between the cutting discs 440, 442 and the combers 444. However, it is believed that they tend to collect at the discharge side of a connecting line between the centers of the shafts 441, 443. As a result, it is possible that the initially formed moistened strips 500a are relatively shorter than shown in Fig. 14. The sequential folding of each moistened strip may begin as each moistened strip is being longitudinally cut. However, with all the cutting discs 440, 442 rotating toward the discharge side, it is believed that the frictional force created on each fully longitudinally compressed strip 500b tends to cause them to collect toward the discharge side of the cutting section 404 rather than toward the connecting line of the cutting section 404.

The moving collection of fully longitudinally compressed strips 500b is maintained in position for discharge by the aligned end faces 448 of each of the combers 444 and the extensions 450. As indicated above, the view shown in Fig. 14 represents the best understanding of the type of collection of the fully longitudinally compressed strips 500b within the cutting section 404 at the discharge side thereof. While the outer cylindrical surface 440c, 442c does impart some compressive fore on each of the initial strips 500a as the fully longitudinally compressed strips 500b are being formed, it should also be understood that the side surfaces 440s and 442s of each cutting wheel 440, 442 also apply side frictional forces to each of the fully longitudinally compressed strip means 500b during and after its formation.

It should now be clear that the general forces provided, by the rotation of the cutting discs 440, 442, to create the fully longitudinally compressed strips 500b also continues to impart force to each previously formed moistened strip to cause migration and movement in a direction toward the discharge section 406. Depending on the thickness of the paper material and the number of folds produced, it would not be uncommon for the fully longitudinally compressed strips 500b, formed of 4.4 inch moistened strip, to be only about 1/2 inch to about 1 inch long in the cutting section 404.

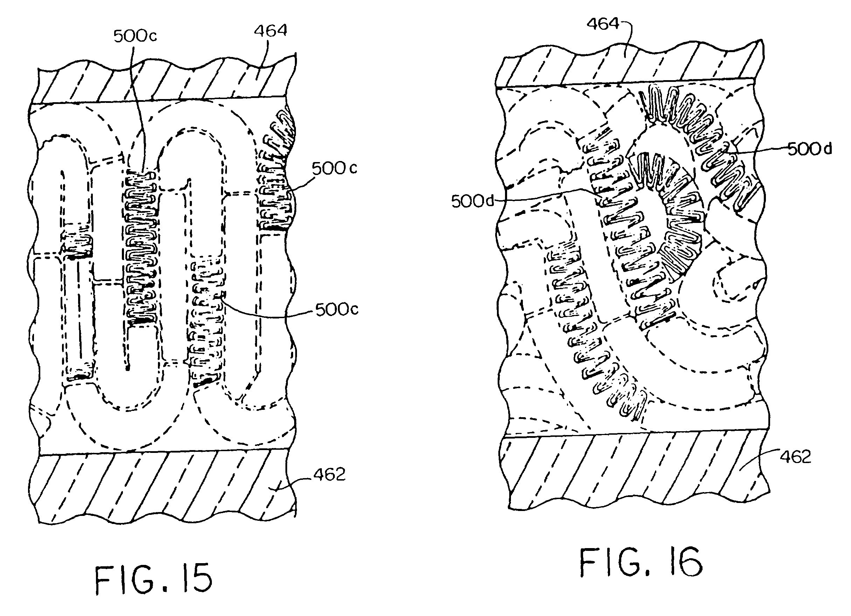

As seen in Fig. 15, the moistened strips are believed to collect in some type of wave form near the entrance end of the discharge chute 460 as tightly longitudinally compressed strips 500c advance through the discharge chute 460. While the tightly longitudinally compressed strips 500c have very tight folds therein, it is not expected that their folds will be quite as tight as those of the fully longitudinally compressed strips 500b as initially formed within the cutting section 404. Clearly, the resistance produced in the discharge chute 460 tending to cause the sequential folding of each of the initial moistened strips 500a will be greater within the cutting section 404 than at subsequent positions along the discharge chute 460. The restricting force is greater at the discharge side of the cutting section 406 that at further locations along the discharge chute 460 because of the added effects of the frictional resistance of the various strips as they tend to slide along the internal surface of the discharge chute 460. Accordingly, Fig. 15 is only a schematic representation of what appears to be occurring at the inlet end of the discharge chute 460 and the waves are probably not as uniform or as evenly positioned. However, the strips 500c should still be quite tightly longitudinally compressed but not to the same extent as the fully longitudinally compressed strips 500b. This tendency to be less longitudinally compressed is fully consistent with the resilient nature of the paper used to form the strips.

This representation in Figs. 15 and 16 of the fully longitudinally compressed strip 500b and the tightly longitudinally compressed strip 500c would be similar whether the strips are dry or moist. Without being able to accurately inspect the interior of the inlet to the discharge chute 460, a similar schematic representation of the strip whether dry or moist would be expected. Additionally, it should be noted that the same problems concerning an accurate inspection of the interior of the cutting section 404 and the inlet to the discharge chute 460 would prevent an accurate determination of when the moistened strips begin to fully dry. It is expected that the moistened strips remain moistened for some time within the discharge chute 460 and are significantly drier by the time the longitudinally compressed strips discharge from the end thereof. In fact, while during the initial cutting of the sheets 438 of moistened paper material 300 the material remains moistened to reduce the formation of dust and nevertheless to have an effective longitudinal cutting thereof for the formation of the plurality of strips, the actual compression of each of the strips by the cutting discs 440, 442 could clearly begin to reduce the moisture in each of the strips and begin the drying process. Clearly, there is considerable friction created within the interior of the discharge chute and at the side and cylindrical edges of each of the cutting discs 440, 442. Accordingly, with the friction created at the discharge of the cutting section 404 and within the discharge chute 460, the drying process for each of the strips occurs during the movement thereof through the discharge chute 460.

As seen in Fig. 16, at a location within the discharge chute 460 which is more remote from the cutting section 404, there is included a mixed array of less longitudinally compressed strips 500d. Again, the less longitudinally compressed strips 500d will further dry and include less moisture than when originally formed as strips within the cutting section 404. As the pressure on the less longitudinally compressed strips 500d tends to reduce, because of the opening at the discharge end of the discharge chute 460, the natural resilience of each strip tends to cause them to expand and to be relatively repositioned within the discharge chute 460. There is a significant volumetric expansion of the strips 500d with clear intermixing and repositioning of all of the less longitudinally compressed strips 500d as they are approaching the end of the discharge chute 460.

With the description provided for Figs. 14-16, it should be clear that the basic force required to form the longitudinally compressed strips is produced by the rotating cutting discs 440, 442 against the resistance of the previously formed longitudinally compressed strips tending to collect throughout the length of the discharge chute 460. The natural resilience of each longitudinally compressed strip causes them to generally longitudinally expand as they proceed toward the end of the discharge chute 460 and, once released from the discharge chute 460 into a container (not shown), further expansion of each strip occurs. Consequently, it should now be clear that the machine 400 does not include simply a shredding machine configuration for forming a collection of strips. Instead, the mass of crimped cellulose paper strips used with the invention is composed of a plurality of individually longitudinally compressed paper strips 102 which tend to expand in an interlocking and resilient manner to provide the resulting mass of paper strips with individual strips having natural resilience, a tendency to longitudinally expand, and a tendency to resist lateral or side forces.

In one embodiment, the plant growth-enhancing material is applied to the paper strips 102 subsequent to the cutting and crimping procedures discussed above. In this embodiment the plant growth-enhancing material is preferably applied by spraying the paper strips with an aqueous solution of the plant growth-enhancing material, or by dipping or immersing the paper strips in the aqueous solution. The concentration of plant growth-enhancing material in the aqueous solution can range up to the saturation point of the plant growth-enhancing material in the water, and in one embodiment can range from about 0.05 Kg (50 g) to about 1 Kg (1000 grams) of plant growth-enhancing material per liter of water, and in one embodiment about $2 \times 10^{-1}$ Kg (200) to about $6 \times 10^{-1}$ Kg (600 grams) per liter.

The following examples are illustrative of the invention. In the following examples, as well as throughout the specification and in the claims, unless otherwise indicated, all parts and percentages are by weight, and all temperatures are in degrees Celsius.

## Example 1

A solution of a 20-20-20 fertilizer (that is, the fertilizer contains 20% by weight nitrogen, 20% by weight $P_2O_5$ and 20% by weight $K_2O$) is made by dissolving the fertilizer in water at a concentration of $4.2 \times 10^{-1}$ Kg of fertilizer per liter of water (3.5 pounds of fertilizer per gallon of water, 420 grams of fertilizer per liter of water). The fertilizer is marketed by Scotts under the name Peters Professional. It has an ammoniacal nitrogen content of 3.89% by weight, a nitrate nitrogen content of 6.11 % by weight, and a urea nitrogen content of 10.00% by weight. The solution is applied to a 40-pound brown kraft paper to provide a dry weight concentration of 167 grams of fertilizer per kilogram of paper. The paper is formed into a roll. The roll of paper is cut and crimped using apparatus of the type illustrated in Figs. 8-16 to form a mass of crimped intermixed paper strips, each of the paper strips having a width of about 1/8-inch and length of about 4.5 inches.

## Example 2

Example 1 is repeated except that 70-pound brown kraft paper is used rather than 40-pound brown kraft paper.

## Example 3

A growth bed is formed using the crimped intermixed paper strips made in accordance with Example 1 by spreading the paper strips in a 4-foot wide bed at a depth of 6 inches. Variegated pittsoporum tobria and ilex crenata are transplanted into the growth bed from one-gallon containers and are grown in the growth bed. The growth bed is irrigated with 0.5 inches of water on alternating days.

## Example 4

Example 3 is repeated except that paper strips made in accordance with Example 2 rather than Example 1 are used.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A medium (100) that is suitable for storing, transporting and/or growing a plant, comprising a mass of crimped intermixed cellulose paper strips (102), each of said paper strips having a narrow width, elongated longitudinally compressed length, and a plurality of transverse folds over the length thereof to provide said strips with a longitudinally compressed construction, said paper strips having a plant growth-enhancing material adhered to their surface.

2. A medium according to Claim 1 characterised in that said strips (102) are intertwined or interconnected with each other.

3. A medium according to Claims 1 or 2 characterised in that said paper strips (102) are biodegradable.

4. A medium according to any preceding claim characterised in that each of said paper strips (102) have an average width in the range of about $1.58 \times 10^{-3}$m to about $1.27 \times 10^{-2}$m (about 1/16 to about 1/2 inch) and an average uncompressed length in the range of about $5.08 \times 10^{-2}$ m to $3.05$ to $10^{-1}$ m (about 2 to about 12 inches).

**5.** A medium according any preceding claim characterised in that said paper strips (102) are made from kraft paper.

**6.** A medium according to any preceding claim characterised in that said plant growth-enhancing material is a fertilizer, insecticide, herbicide, fungicide, or mixture of two or more thereof.

**7.** A medium according to any preceding claim characterised in that said plant growth-enhancing material comprises nitrogen, phosphorous and/or potassium.

**8.** A medium according any preceding claim characterised in that said plant growth-enhancing material comprises nitrogen, $P_2O_5$, $K_2O$ or a mixture of two or more thereof.

**9.** A medium according to any preceding claim characterised in that said plant growth-enhancing plant material comprises ammonia, ammonium nitrate, ammonium sulfate, ammonium sulfate-nitrate, calcium ammonium nitrate, urea, calcium nitrate, sodium nitrate, calcium cyanamide, ammonium chloride, or a mixture of two or more thereof.

**10.** A medium according to any preceding claim characterised in that said plant growth-enhancing material comprises urea-formaldehyde, isobutylidene diurea, crontonylidene diurea or sulfur-coated urea.

**11.** A medium according to any preceding claim characterised in that said plant growth-enhancing material comprises wet process super phosphoric acid, normal super phosphate or triple superphosphate.

**12.** A medium according to any preceding claim characterised in that said plant growth-enhancing material comprises potassium chloride, potassium sulfate, potassium nitrate or potassium phosphate.

**13.** A medium according to any preceding claim characterised in that said plant growth-enhancing material comprises calcium, magnesium, sulfur, iron, manganese, copper, zinc, boron or molybdenum.

**14.** A medium according to any preceding claim characterised in that said plant growth-enhancing material comprises one, or a mixture of two or more, of monammonium phosphate, diammonium phosphate, ammonium polyphosphate, nitrophospate.

**15.** A medium according to any preceding claim characterised in that said plant growth-enhancing material comprises a compound selected from the group consisting of lindane, methoxychlor, Dilan, chlorodane, heptachlor, endrin, toxaphene, endosulfan, Kepone, mirex, Perthane, carbaryl, diflubenzuron, pyrethrum, allethrin, dimethrin, fenothrin, resmethrin and tetramethrin.

**16.** A medium according to any preceding claim characterised in that said plant growth-enhancing material comprises a compound selected from the group consisting of aryloxyalkanoic acid, atrazine, simazine, promtryn, cyanazine, terbutryn, monouron, diuron, fluometuran, linuron, siduron, chloroxuron, isopropylphenylcarbamate, isopropyl-3-chlorophenylcarbamte, s-ethyl dipropylthiocarbamate, propanil, diphenamid, alachlor, naptalam, propachlor, trichloroacetic acid, 2,3,6-tricholorophenyl acetic acid, chloramben, dicamba, dichlobenil, 2,6-dibromo-4-cyanphenol, N,N-dipropyl-2,6-dinitro-4-trifluoromethylaniline, diquat salt, paraquat salt, 4-amino-3,5,6-trichloropicolinic acid, 3-amino-s-triazole, N-(phosphonomethyl) glycine, bromacil, isocil, terbacil, diphenyl ethers, sulfamic acid, ammonium sulfamate, boron compounds, arsenical compounds, and sodium chlorate.

**17.** A medium according to any preceding claim characterised in that said plant growth-enhancing medium comprises a compound selected from the group consisting of $C_1$-$C_{10}$ fatty acids, quinones, dithiocarbamates, tetramethylthiuram disulfide, disodium ethyenebisdithiocarbamate, nabam, maneb, imidazolines, guanidines, trichloromethylthiocarboxmides, 2,3,4,6-tetrachhloro nitrobenzene, pentachloronitrobenzene, 1,2,4-tricholoro-3,5-dinitrobenzene, 1,3,5-trichloro-2,4,6-trinitrobenzene, hexachlorobenzene, tetrachloroisophthalo nitrile, 2,3-dihydro-5-carboxanilido-6-methyl-1,4oxathiin,2(-4thiazoyl) benzimidazole, methyl (1-butylcarbamoyl)-2-benzimidazolylcarbamate, 5-butyl-2-dimethyl amino-6-methyl-4(1H)-pyrimidinone, ethirmol, dinocap, fenamenosulf, and actidone.

**18.** A medium according to any preceding claim characterised in that the ratio of the weight of plant growth-enhancing material to the weight of paper strips (102) in said medium is from about 10 to about 1000 grams of plant growth-enhancing material per kilogram of paper strips.

**19.** A plant with unsoiled roots and the medium of any preceding claim around said unsoiled roots.

**20.** A process for making a mass of crimped intermixed cellulose paper strips (102) suitable for storing, transporting and/or growing a plant, said process characterised by:

treating a sheet of paper with a plant growth-enhancing material;
cutting the sheet of paper into a plurality of paper strips having narrow widths and elongated lengths;
crimping the paper strips to form a plurality of transverse folds over the length of said strips and to provide said strips with a longitudinally compressed . construction; and
intermixing said strips to form a mass of crimped intermixed cellulose papers strips treated with a plant growth-enhancing material.

**Patentansprüche**

**1.** Medium (100), geeignet zum Lagern, Transportieren und/oder Züchten einer Pflanze, aufweisend eine Menge gekräuselter, vermischter Zellulose-Papierstreifen (102), wobei jeder der genannten Papierstreifen eine schmale Breite, eine längliche, longitudinal komprimierte Länge und eine Anzahl von Querfalten über seine Länge aufweist, um die genannten Streifen mit einem longitudinal komprimierten Aufbau zu schaffen, wobei die genannten Streifen ein an ihren Oberflächen haftendes pflanzenwachstumssteigerndes Material aufweisen.

**2.** Medium gemäß Anspruch 1, dadurch gekennzeichnet, dass die genannten Streifen (102) miteinander verschlungen oder verbunden sind.

**3.** Medium gemäß den Ansprüchen 1 oder 2, dadurch gekennzeichnet, dass die genannten Papierstreifen (102) biologisch abbaubar sind.

**4.** Medium gemäß einem der vorangegangenen Ansprüche, dadurch gekennzeichnet, dass jeder der genannten Papierstreifen (102) eine mittlere Breite in dem Bereich von ungefähr $1,58 \times 10^{-3}$ m bis ungefähr $1,27 \times 10^{-2}$ m (ungefähr 1/16 bis 1/2 inch) und eine mittlere unkomprimierte Länge in dem Bereich von ungefähr $5,08 \times 10^{-2}$ m bis $3,05 \times 10^{-1}$ m (ungefähr 2 bis ungefähr 12 inches) aufweisen.

**5.** Medium gemäß einem der vorangegangenen Ansprüche, dadurch gekennzeichnet, dass die genannten Papierstreifen (102) aus Kraftpapier bestehen.

**6.** Medium gemäß einem der vorangegangenen Ansprüche, dadurch gekennzeichnet, dass das genannte pflanzenwachstumssteigernde Material ein Düngemittel, Insektizid, Herbizid, Fungizid oder eine Mischung von zwei oder mehreren davon ist.

**7.** Medium gemäß einem der vorangegangenen Ansprüche, dadurch gekennzeichnet, dass das pflanzenwachstumssteigernde Material Stickstoff, Phosphor und/oder Kalium aufweist.

**8.** Medium gemäß einem der vorangegangenen Ansprüche, dadurch gekennzeichnet, dass das pflanzenwachstumssteigernde Material Stickstoff, $P_2O_5$, $K_2O$ oder ein Gemisch aus zwei oder mehreren davon aufweist.

**9.** Medium gemäß einem der vorangegangenen Ansprüche, dadurch gekennzeichnet, dass das pflanzenwachstumssteigernde (Pflanzen) Material Ammoniak, Ammoniumnitrat, Ammoniumsulfat, Ammoniumsulfat-Nitrat, Kalziumammoniumnitrat, Harnstoff, Kalziumnitrat, Natriumnitrat, Kalziumcyanamid, Ammoniumchlorid oder eine Mischung aus zwei oder mehreren davon aufweist.

**10.** Medium gemäß einem der vorangegangenen Ansprüche, dadurch gekennzeichnet, dass das pflanzenwachstumssteigernde Material Harnstoff-Formaldehyd, Isobutylidendiharnstoff, Crotonylidendiharnstoff oder schwefelbeschichteten Harnstoff aufweist.

**11.** Medium gemäß einem der vorangegangenen Ansprüche, dadurch gekennzeichnet, dass das pflanzenwachstumssteigernde Material Superphosphorsäure aus dem Nassverfahren, normale Superphosphate oder dreifache Superphosphate aufweist.

**12.** Medium gemäß einem der vorangegangenen Ansprüche, dadurch gekennzeichnet, dass das pflanzenwachstumssteigernde Material Kaliumchlorid, Kaliumsulfat, Kaliumnitrat oder Kaliumphosphat aufweist.

**13.** Medium gemäß einem der vorangegangenen Ansprüche, dadurch gekennzeichnet, dass das pflanzenwachstumssteigernde Material Kalzium, Magnesium, Schwefel, Eisen, Mangan, Kupfer, Zink, Bor oder Molybdän aufweist.

**14.** Medium gemäß einem der vorangegangenen Ansprüche, dadurch gekennzeichnet, dass das pflanzenwachstumssteigernde Material einen oder eine Mischung von zwei oder mehreren der Stoffe Monoammoniumphosphat, Diammoniumphosphat, Ammoniumpolyphosphat, Nitrophosphat aufweist.

**15.** Medium gemäß einem der vorangegangenen Ansprüche, dadurch gekennzeichnet, dass das pflanzenwachstumssteigernde Material eine Verbindung ausgewählt aus der Gruppe bestehend aus Lindan, Methoxychlor, Dilan, Chlorodan, Heptachlor, Endrin, Toxaphen, Endosulfan, Kepon, Mirex, Perthan, 1-Naphtyl-N-methylcarbamat, Difluorbenzuron (diflubenzuron), Pyrethrum, Allethrin, Dimethrin, Fenothrin, Resmethrin und Tetramethrin aufweist.

**16.** Medium gemäß einem der vorangegangenen Ansprüche, dadurch gekennzeichnet, dass das pflanzenwachstumssteigernde Material eine Verbindung ausgewählt aus der Gruppe bestehend aus Aryloxyalkansäure, Atrazin, Simazin, Promtryn, Cyanazin, Terbutryn, Monouron, Diuron, Fluormeturan, Linuron, Siduron, Chloroxuron, Isopropylphenylcarbamat, Isopropyl-3-chlorophenylcarbamat, S-Ethyldipropylthiocarbamat, Propanil, Diphenamid, Alachlor, Naptalam, Propachlor, Trichloressigsäure, 2,3,6-Tricholorophenylessigsäure, Chloramben, Dicamba, Dichlobenil, 2,6-Dibrom-4-cyanphenol, N,N-Dipropyl-2,6-dinitro-4-Trifluormethylanilin, Diquatsalz, Paraquatsalz, 4-Amino-3,5,6-trichlorpicolinsäure, 3-Amino-s-Triazol, N-(phosphonomethyl)Glyzin, Bromacil, Isocil, Terbacil, Diphenylether, Sulfamidsäure, Ammoniumsulfamat, Borverbindungen, Arsenverbindungen und Natriumchlorat aufweist.

**17.** Medium gemäß einem der vorangegangenen Ansprüche, dadurch gekennzeichnet, dass das pflanzenwachstumssteigernde Material eine Verbindung aufweist ausgewählt aus der Gruppe bestehend aus $C_1$-$C_{10}$ Fettsäuren, Chinonen, Dithiocarbamaten, Tetramethylthiuramdisulfid, Dinatriumethylenbisdithiocarbamat, Nabam, Maneb, Imidazolin, Guanidine, Trichlormethylthiocarboxamide, 2,3,4,6-Tetrachlornitrobenzen, Pentachlornitrobenzen, 1,2,4-Trichlor-3,5-dinitrobenzen, 1,3,5-Trichlor-2,4,6-trinitrobenzen, Hexachlorbenzen, Tetrachlorisophthalonitril, 2,3-Dihydro-5-carboxanilido-6-methyl-1,4-oxathiin, 2-(4-Thiazoyl)benzimidazol, Methyl(1-butylcarbamoyl)-2-benzimidazolylcarbamat, 5-Butyl-2-dimethylamino-6-methyl-4(1H)-pyrimidinon, Ethirmol, Dinocap, Fenamenosulf und Actidon.

**18.** Medium gemäß einem der vorangegangenen Ansprüche, dadurch gekennzeichnet, dass das Verhältnis des Gewichts von pflanzenwachstumssteigerndem Material zu dem Gewicht von Papierstreifen (102) in dem Medium ungefähr 10 bis ungefähr 1000 g von pflanzenwachstumssteigerndem Material pro Kilogramm Papierstreifen ist.

**19.** Pflanze mit nicht-verschmutzten Wurzeln und das Medium gemäß einem der vorangegangenen Ansprüche um die nicht-verschmutzten Wurzeln herum.

**20.** Verfahren zum Herstellen einer Masse aus gekräuselten, vermischten Zellulose-Papierstreifen (102), die zum Lagern, Transportieren und/oder Züchten einer Pflanze geeignet ist, wobei das Verfahren gekennzeichnet ist durch:

Behandeln einer Papierbahn mit einem pflanzenwachstumssteigernden Material;

Schneiden der Papierbahn in eine Vielzahl von Papierstreifen, die schmale Breiten und längliche Längen aufweisen;

Kräuseln der Papierstreifen, um eine Vielzahl von Querfalten über die Länge der Streifen zu bilden, und um die Streifen mit einem longitudinal komprimierten Aufbau zu versehen; und

Vermischen der Streifen, um eine Masse von gekräuselten vermischten Zellulose-Papierstreifen zu bilden, die mit einem pflanzenwachstumssteigernden Material behandelt wurden.

**Revendications**

**1.** Milieu (100) qui convient au stockage, au transport et/ou à la croissance d'une plante, comprenant une masse de bandes de papier cellulosique crêpé (102), mélangées les unes aux autres, chacune desdites bandes de papier ayant une faible largeur, une grande longueur comprimée longitudinalement et une pluralité de pliures transversales sur sa longueur pour conférer auxdites bandes une structure comprimée longitudinalement, lesdites bandes de papier portant une matière activatrice de croissance des plantes adhérant à leur surface.

2.  Milieu suivant la revendication 1, caractérisé en ce que les bandes (102) sont entrelacées ou interconnectées les unes aux autres.

3.  Milieu suivant la revendication 1 ou 2, caractérisé en ce que les bandes de papier (102) sont biodégradables.

4.  Milieu suivant l'une quelconque des revendications précédentes, caractérisé en ce que chacune des bandes de papier (102) a une largeur moyenne comprise dans l'intervalle d'environ $1,58 \times 10^{-3}$ mètre à environ $1,27 \times 10^{-2}$ mètre (environ 1/16 à environ ½ inch) et une longueur moyenne à l'état non comprimé comprise dans l'intervalle d'environ $5,08 \times 10^{-2}$ mètre à $3,05 \times 10^{-1}$ mètre (environ 2 à environ 12 inches).

5.  Milieu suivant l'une quelconque des revendications précédentes, caractérisé en ce que les bandes de papier (102) sont constituées de papier kraft.

6.  Milieu suivant l'une quelconque des revendications précédentes, caractérisé en ce que la matière activatrice de croissance des plantes est un engrais, un insecticide, un herbicide, un fongicide ou un mélange de deux ou plus de deux de ces matières.

7.  Milieu suivant l'une quelconque des revendications précédentes, caractérisé en ce que la matière activatrice de croissance des plantes comprend de l'azote, du phosphore et/ou du potassium.

8.  Milieu suivant l'une quelconque des revendications précédentes, caractérisé en ce que la matière activatrice de croissance des plantes comprend de l'azote, $P_2O_5$, $K_2O$ ou un mélange de deux ou plus de deux de ces agents.

9.  Milieu suivant l'une quelconque des revendications précédentes, caractérisé en ce que la matière activatrice de croissance des plantes comprend l'ammoniac, le nitrate d'ammonium, le sulfate d'ammonium, le sulfate-nitrate d'ammonium, le nitrate de calcium et d'ammonium, l'urée, le nitrate de calcium, le nitrate de sodium, le cyanamide calcique, le chlorure d'ammonium ou un mélange de deux ou plus de deux de ces composés.

10. Milieu suivant l'une quelconque des revendications précédentes, caractérisé en ce que la matière activatrice de croissance des plantes comprend de l'urée-formaldéhyde, de l'isobutylidène-diurée, de la crotonylidène-diurée ou de l'urée enrobée de soufre.

11. Milieu suivant l'une quelconque des revendications précédentes, caractérisé en ce que la matière activatrice de croissance des plantes comprend de l'acide superphosphorique formé par le procédé par voie humide, un superphosphate normal ou un superphosphate triple.

12. Milieu suivant l'une quelconque des revendications précédentes, caractérisé en ce que la matière activatrice de croissance des plantes comprend le chlorure de potassium, le sulfate de potassium, le nitrate de potassium ou le phosphate de potassium.

13. Milieu suivant l'une quelconque des revendications précédentes, caractérisé en ce que la matière activatrice de croissance des plantes comprend le calcium, le magnésium, le soufre, le fer, le manganèse, le cuivre, le zinc, le bore ou le molybdène.

14. Milieu suivant l'une quelconque des revendications précédentes, caractérisé en ce que la matière activatrice de croissance des plantes comprend un composé ou un mélange de deux ou plus de deux composés, consistant en phosphate de mono-ammonium, phosphate de diammonium, polyphosphate d'ammonium et nitrophosphate.

15. Milieu suivant l'une quelconque des revendications précédentes, caractérisé en ce que la matière activatrice de croissance des plantes comprend un composé choisi dans le groupe consistant en le lindane, le méthoxychlore, le Dilan, le chlorodane, l'heptachlore, l'endrine, le toxaphène, l'endosulfan, la Képone, le mirex, le Perthane, le carbaryl, le diflubenzuron, le pyrèthre, l'alléthrine, la diméthrine, la fénothrine, la resméthrine et la tétraméthrine.

16. Milieu suivant l'une quelconque des revendications précédentes, caractérisé en ce que la matière activatrice de croissance des plantes comprend un composé choisi dans le groupe consistant en un acide aryloxyalcanoïque, l'atrazine, la simazine, la prométryne, la cyanazine, la terbutryne, le monouron, le diuron, le fluométuran, le linuron, le siduron, le chloroxuron, le phénylcarbamate d'isopropyle, le 3-chlorophénylcarbamate d'isopropyle, le dipropylthiocarbamate de S-éthyle, le propanil, le diphénamide, l'alachlore, le naptalam, le propachlore, l'acide trichloracétique, l'acide 2,3,6-trichlorophénylacétique, le chlorambène, le dicamba, le dichlobénil, le 2,6-dibromo-4-cyanophénol, la N,N-dipropyl-2,6-dinitro-4-trifluorométhylaniline, un sel de diquat, un sel de paraquat, l'acide 4-amino-3,5,6-trichloropicolinique, le 3-amino-S-triazole, la N-(phosphonométhyl)glycine, le bromacil, l'isocil, le terbacil, des éthers de diphényle, l'acide sulfamique, le sulfamate d'ammonium, des composés de bore, des composés arsenicaux et le chlorate de sodium.

17. Milieu suivant l'une quelconque des revendications précédentes, caractérisé en ce que la matière activatrice de croissance des plantes comprend un composé choisi dans le groupe consistant en des acides gras en $C_1$ à $C_{10}$, des quinones, des dithiocarbamates, le disulfure de tétraméthylthiurame, l'éthylène-bisdithiocarbamate disodique, le nabam, le manèbe, des imidazolines, des guanidines, des trichlorométhylthiocarboxamides, le 2,3,4,6-tétrachloronitrobenzène, le pentachloronitrobenzène, le 1,2,4-trichloro-3,5-dinitrobenzène, le 1,3,5-trichloro-2,4,6-trinitrobenzène, l'hexachlorobenzène, le tétrachloro-isophtalonitrile, la 2,3-dihydro-5-carboxanilido-6-méthyl-1,4-oxathiine, le 2-(4-thiazoyl)benzimidazole, le (1-butylcarbamoyl)-2-benzimidazoylcarbamate de méthyle, la 5-butyl-2-diméthylamino-6-méthyl-4(1H)-pyrimidinone, l'éthirimol, le dinocap, le fénaménosulf et l'actidone.

18. Milieu suivant l'une quelconque des revendications précédentes, caractérisé en ce que le rapport du poids de la matière activatrice de croissance des plantes au poids des bandes de papier (102) dans ledit milieu est compris dans l'intervalle d'environ 10 à environ 1000 g de matière activatrice de croissance des plantes par kg de bandes de papier.

19. Plante avec des racines non souillées et le milieu suivant l'une quelconque des revendications précédentes autour desdites racines non souillées.

20. Procédé pour la préparation d'une masse de bandes de papier cellulosique crêpé mélangées (102) convenables pour le stockage, le transport et/ou la croissance d'une plante, ledit procédé étant caractérisé par les étapes consistant :

à traiter une feuille de papier avec une matière activatrice de croissance des plantes ;
à couper la feuille de papier en une pluralité de bandes de papier ayant de faibles largeurs et de grandes longueurs ;
à crêper les bandes de papier pour former une pluralité de pliures transversales suivant la longueur desdites bandes et conférer auxdites bandes une structure longitudinalement comprimée ; et
à entremêler lesdites bandes pour former une masse de bandes de papier cellulosique crêpées entremêlées, traitées avec une matière activatrice de croissance des plantes.

EP 0 817 564 B1

FIG. 1

FIG. 2

FIG. 3

FIG. 4

FIG. 5

FIG. 6

FIG. 7

FIG. 8

EP 0 817 564 B1

FIG. 9

FIG. 10

FIG. 11

EP 0 817 564 B1

FIG. 12

FIG. 13

FIG. 14

EP 0 817 564 B1

FIG. 16

FIG. 15